# EUROPÄISCHE PATENTSCHRIFT

(11) **EP 2 904 667 B1**
(45) Veröffentlichungstag und Bekanntmachung des Hinweises auf die Patenterteilung: **08.06.2016**
(21) Anmeldenummer: 13765959.5
(22) Anmeldetag: 21.09.2013
(51) Int. Cl.: H01R 13/74, H01R 13/514, B60L 11/18, H01R 31/06

(54) **MODULSYSTEM FÜR EINE LADEVORRICHTUNG, LADEVORRICHTUNG SOWIE FAHRZEUG MIT EINER AUS DEM MODULSYSTEM ERSTELLTEN LADEVORRICHTUNG**
MODULE SYSTEM FOR A CHARGING APPARATUS, CHARGING APPARATUS AND VEHICLE COMPRISING A CHARGING APPARATUS CONSTRUCTED FROM THE MODULE SYSTEM
SYSTÈME MODULAIRE POUR UN DISPOSITIF DE CHARGEMENT, DISPOSITIF DE CHARGEMENT AINSI QUE VÉHICULE COMPORTANT UN DISPOSITIF DE CHARGEMENT RÉALISÉ À PARTIR DUDIT SYSTÈME MODULAIRE

(30) Priorität: 05.10.2012 DE 102012019605
(43) Veröffentlichungstag der Anmeldung: 12.08.2015
(73) Patentinhaber: Audi AG, 85045 Ingolstadt (DE)
(72) Erfinder: TOTH, Michael, 93333 Neustadt/Donau (DE)
(74) Vertreter: Wohnert, Dietmar
(86) Internationale Anmeldenummer: PCT/EP2013/002842
(87) Internationale Veröffentlichungsnummer: WO 2014/053221

(56) Entgegenhaltungen:
- WO-A1-2012/086430
- WO-A1-2012/111081
- DE-A1-102010 045 131
- DE-A1-102011 004 834
- DE-A1-102011 006 633
- DE-U1-202011 050 412
- US-A- 5 626 479
- US-A1- 2011 294 328

## Beschreibung

Die Erfindung betrifft ein Modulsystem für eine Ladevorrichtung, die eine Ladedose zum Laden einer elektrischen Speichervorrichtung eines Fahrzeugs aufweist, wobei die Ladedose eine Buchse zur Aufnahme eines Ladesteckers sowie einen Befestigungsflansch zum Befestigen der Ladedose an dem Fahrzeug aufweist. Die Erfindung betrifft auch eine aus dem Modulsystem erstellte Ladevorrichtung. Ferner betrifft die Erfindung ein Fahrzeug mit einer solchen Ladevorrichtung. Bei dem Fahrzeug handelt es sich z.B. um einen zumindest teilweise elektrisch angetriebenen Personenkraftwagen. Bei der elektrischen Speichervorrichtung handelt es sich z.B. um einen Akkumulator für einen Elektroantrieb.

Aus dem Stand der Technik ist es bekannt, bei Kraftfahrzeugen mit Elektroantrieb eine Ladedose vorzusehen, über welche eine Batterie des Kraftfahrzeugs geladen werden kann, indem ein Stecker an einer Ladestation mit der Ladedose gekoppelt wird. Die bekannten Ladedosen können vergleichbar zu den bei mit Verbrennungsmotoren angetriebenen Kraftfahrzeugen vorgesehenen Tankeinfüllstutzen in einer Karosserie des Kraftfahrzeugs vorgesehen sein. Ladedosen müssen zum einen gut erreichbar für ein manuelles Laden sein, zum anderen ist eine möglichst praktische Integration in eine Fahrzeugkarosserie und dabei z.B. auch eine Abdichtung erforderlich.

Die deutsche Offenlegungsschrift DE 10 2011 006 633 A1 zeigt eine Ladedose für ein Fahrzeug, welche neben einem herkömmlichen Tankeinfüllstutzen in einer Mulde vorgesehen ist. Über eine innerhalb der Ladedose angeordnete Ladebuchse kann ein Ladestecker an den elektrischen Kreis des Fahrzeugs gekoppelt werden.

Das deutsche Gebrauchsmuster DE 20 2011 050 412 U1 zeigt ein in einer Tankmulde angeordnetes Anschlussmodul, welches einen Ladeanschluss mit einer Ladebuchse oder einen Einfüllstutzen aufweist. Die Tankmulde ist in die Öffnung eines feststehenden Karosserieteils einsetzbar.

Die DE 10 2011 004 834 A1 offenbart eine Ladeeinrichtung für ein Elektrofahrzeug, welche aus Bauteilen zusammengesetzt ist. Wesentlich ist ein Bauteil mit einer Adapterplatte, das ein weiteres Bauteil mit genormten und genormt angeordneten elektrischen Steckverbindern aufzunehmen vermag.

Die DE 297 11 556 U1 offenbart eine Stromversorgung für ein motorisiertes Zweirad. Dort ist eine Einbaudose rückseitig mit einer aufsteckbaren Hülse versehen, welche einen Spritzwasserschutz von elektrischen Kontakten darstellt.

Bei vorbekannten Ladedosen ist es erforderlich, die Schnittstellen zwischen Karosserie und Ladedose sowie zwischen Ladedose und Ladestecker aufeinander abzustimmen. Dies hat mehrere Gründe. In unterschiedlichen Ländern, z.B. auf dem asiatischen Kontinent im Vergleich zu Europa, haben sich unterschiedliche Steckergeometrien durchgesetzt, und für jede dieser Geometrien muss eine geeignete Blende oder Abdichtung oder allgemein Steckverbindung bereitgestellt werden. Auch ist die Eingliederung in einen bestimmten Typ einer Karosserie nicht immer auf dieselbe Art und Weise möglich oder sinnvoll, denn die von einer Karosserie geformte Einbaumulde zur Montage einer Ladedose kann nicht bei allen Karosserietypen dieselbe Geometrie aufweisen. Eine abweichende Schnittstelle erfordert aber eine ganze Reihe von weiteren Änderungen an zur Ladedose benachbarten Bauteilen, z.B. im Hinblick auf Dichtungen, Befestigungspunkten an der Karosserie oder Bauraum um die Ladedose. Diese hohe Vielfalt erfordert viele unterschiedliche Bauteile, die allesamt jeweils geprüft und/oder zugelassen werden müssen.

Aufgabe der vorliegenden Erfindung ist es daher, eine Vorrichtung der eingangs genannten Art bereitzustellen, mit welcher eine Ladedose auf einfachere Weise in eine Karosserie integriert werden kann, auch wenn unterschiedliche Randbedingungen, insbesondere Einbausituationen oder Steckergeometrien vorliegen.

Diese Aufgabe wird durch ein Modulsystem mit den Merkmalen des Patentanspruchs 1, durch eine Ladevorrichtung mit den Merkmalen des Patentanspruchs 7 sowie durch ein Fahrzeug mit den Merkmalen des Patentanspruchs 8 gelöst. Vorteilhafte Ausgestaltungen mit zweckmäßigen Weiterbildungen der Erfindung sind in den abhängigen Patentansprüchen angegeben.

Das erfindungsgemäße Modulsystem ist zum Erstellen einer Vielzahl von Varianten der Ladevorrichtung ausgebildet und umfasst:
- einen ersten Modultyp mit einer ersten Schnittstelle und einer zweiten Schnittstelle;
- mehrere Varianten eines zweiten Modultyps mit jeweils einer ersten Schnittstelle und einer zweiten Schnittstelle, wobei die Varianten unterschiedliche zweite Schnittstellen aufweisen;
- mehrere Varianten eines dritten Modultyps mit jeweils einer ersten Schnittstelle und einer zweiten Schnittstelle, wobei die Varianten unterschiedliche zweite Schnittstellen aufweisen;
wobei die erste Schnittstelle des zweiten Modultyps zur Kopplung mit der ersten Schnittstelle des ersten Modultyps ausgebildet ist;
wobei die erste Schnittstelle des dritten Modultyps zur Kopplung mit der zweiten Schnittstelle des ersten Modultyps ausgebildet ist;
und wobei die Ladedose bildbar ist aus einer Kopplung einer Variante des zweiten Modultyps, dem ersten Modultyp und einer Variante des dritten Modultyps.

Mit anderen Worten kann eines der Module einbausituations-unabhängig als Standard-Modul ausgeführt sein. Dies liefert einen großen Flexibilitätsgrad für die anderen Module und eine eindeutige Schnittstelle. Das Modul vom ersten Modul-Typ kann z.B. auch den Befestigungsflansch aufweisen. Hierdurch kann die Befestigung der Ladedose an der Karosserie immer auf dieselbe Art und Weise und in derselben Lage des Standard-Moduls in Bezug auf die Karosserie erfolgen. Dies erleichtert z.B. das Abdichten der Ladedose oder auch den elektrischen Anschluss der Ladedose mit weiteren Leitungen innerhalb des Fahrzeugs. Die Module können die definierte Schnittstelle z.B. durch einen stirnseitigen Flansch bilden, der bei jedem Modul-Typ mit einheitlichen Abmessungen ausgeführt ist, und über welchem bevorzugt auch eine Zentrierung des einen Moduls gegenüber dem anderen Modul erfolgt, z.B. über eine umlaufende Fase oder einen umlaufenden Absatz, sei es für eine Außen- oder Innenzentrierung. Durch die Befestigung der Ladedose an dem Fahrzeug mittels des Befestigungsflanschs am Standard-Modul ist die Lage weiterer Module definiert, insbesondere in Bezug auf die Karosserie oder Leitungsabgänge zum Inneren des Fahrzeugs, und die weiteren Module können auf kundenspezifische Weise ausgelegt werden, sofern erforderlich.

Als eine Mehrzahl an Modulen sind bereits zwei Module aufzufassen, bevorzugt jedoch drei Module oder auch mehr als drei Module.

Die Ladedose ist durch diejenigen Module gebildet, welche eine elektrische Funktion direkt in Verbindung mit einem Beladevorgang des Fahrzeugs übernehmen, also durch die Module, durch welche der Ladestrom fließt.

Bevorzugt ist das Standard-Modul, also das Modul vom ersten Modul-Typ, zwischen zwei weiteren Modulen vorgesehen, mit welchen es über Schraubpunkte oder Clipsgeometrien verbunden ist. Die beiden weiteren Module müssen nicht standardisiert sein und können an spezifische Einbausituationen angepasst werden. Lediglich die Schnittstelle zu dem Standard-Modul muss auf das Standard-Modul abgestimmt sein. Die Haupt-Verbindung zwischen Fahrzeug und Ladedose kann unabhängig davon von dem Standard-Modul sichergestellt werden.

Durch die Standardisierung eines von mehreren Modulen kann auf einfache Weise unabhängig vom Fahrzeugtyp eine Ladedose von mehreren Herstellern geplant und gefertigt werden. Jeder Hersteller kann für sein Modul auch Varianten anbieten, die jeweils über die geeignete Schnittstelle zu dem standardisierten Modul verfügen. Als einbausituations-unabhängig ist dabei bevorzugt ein Modul aufzufassen, welches standardgemäß unabhängig von einem Fahrzeugtyp und einer Karosserieform jedenfalls verwendet werden kann, insbesondere indem eine Kopplung an die Karosserie über den am Standard-Modul vorgesehenen Befestigungsflansch erfolgt.

In einer vorteilhaften Ausgestaltung der Erfindung ist die Ladedose aus drei seriell, also nebeneinander in Reihe angeordneten Modulen gebildet. Dabei kann eines der Module in Bezug auf eine Karosserieaußenfläche einer Karosserie des Fahrzeugs außen als nach außen gerichtetes Modul vorgesehen sein, und ein weiteres der Module innen liegend als nach innen gerichtetes Modul vorgesehen sein, wobei das nach außen gerichtete Modul sowie das nach innen gerichtete Modul vom zweiten und dritten Modultyp sind. Das dazwischen liegende mittlere Modul ist dabei vom ersten Modultyp. Bevorzugt sind hierbei die Schnittstellen, über welche die Module miteinander koppelbar sind, an Stirnseiten der Module angeordnet. Sie können z.B. als Rastverbindung oder Bajonettverbindung ausgebildet sein.

Das mittlere Modul, also das Modul vom ersten Modultyp, braucht dabei für eine Vielzahl an Fahrzeugtypen nur in einer einzigen Ausführungsform bereitgestellt werden. Dies reduziert die Anzahl unterschiedlicher Bauteile, wodurch auch die Werkzeuganzahl und der Aufwand für Qualitätssicherung und Freigabe verringert werden kann. Das mittlere Modul muss nur einmal freigeprüft werden. Das nach außen gerichtete Modul ist bevorzugt von einem Kunden als Kundenmodul bereitstellbar. Der Kunde kann das Kundenmodul mit einer passenden Schnittstelle bereitstellen und hat weiterhin die Möglichkeit, mehrere Varianten anzubieten. Das nach innen gerichtete Modul ist bevorzugt als Leistungsmodul bereitstellbar.

Das nach außen gerichtete Modul kann dabei z.B. eine Funktion zur Anbindung einer Weichkomponente aufweisen, und mit einem spezifischen Designdeckel, einer spezifischen Designblende und/oder einer LED versehen sein. Der Designdeckel kann z.B. im Hinblick auf ein Klappen, ein Stecken oder ein Drehen ausgelegt sein. Eine Weichkomponente kann z.B. die Funktion einer radialen Dichtung übernehmen und manschettenartig um Leitungen oder außen liegenden Oberflächen vorgesehen sein.

Das nach innen gerichtete Modul kann dabei z.B. eine Tülle aufweisen, Kontakte als Verbindung zu einer Leitung, und eine Leistungsbefestigung bzw. Leistungsführung.

In einer vorteilhaften Ausgestaltung der Erfindung ist an der Ladevorrichtung ein Ladedosenhalter zur Montage der Ladedose an der Karosserie vorgesehen, und der erste Modultyp ist als ein Kernmodul ausgeführt, welches für eine elektrische und/oder elektronische Funktion der Ladevorrichtung ausgebildet ist und welches mit dem Ladedosenhalter gekoppelt ist, insbesondere über den Befestigungsflansch. Durch einen Ladedosenhalter kann in vielen Fällen die Montage einer Ladedose an einer Karosserie erleichtert werden. Auch kann durch einen Ladedosenhalter eine mechanische Verstärkung und/oder ein Lageversatz vorgesehen werden. Durch die Kopplung des mittleren Moduls mit dem Ladedosenhalter kann eine hohe Variabilität für das äußere und innere Modul aufrecht erhalten werden, ohne dass weitere Schnittstellen vorgesehen werden müssen. Der Ladedosenhalter kann an seiner Schnittstelle und/oder an der Schnittstelle zum mittleren Flansch eine Zentrierung aufweisen, und wahlweise kann eine Zentrierung des mittleren Moduls bezüglich des Ladedosenhalters über den Befestigungsflansch erfolgen. Das mittlere Modul als ein Kernmodul mit einer Vielzahl an Funktionen auszubilden liefert nicht zuletzt den Vorteil, dass das wichtigste Modul immer in derselben Art und Weise vorliegt. Es hat sich gezeigt, dass sich Vorteile wie größere Funktionssicherheit, bessere Robustheit oder leichtere Wartbarkeit oder Instandsetzung ergeben, insbesondere aufgrund der standardisierten und optimierbaren Anbindung an die Karosserie, wenn das mittlere Modul und nicht etwa das innenliegende Modul als Kernmodul ausgeführt ist.

Eine elektrische Funktion kann darin liegen, den in Bezug auf Stromstärke und Spannung geeigneten elektrischen Kontakt bereitzustellen und/oder eine Sicherung und/oder einen Temperatursensor in Verbindung mit einer Überwachung der elektrischen Funktion vorzusehen. Eine z.B. über einen bestimmten Wert ansteigende Temperatur kann dabei einen Hinweis auf eine Fehlfunktion liefern, und eine Temperatur im Bereich bestimmter Grenzwerte kann signalisieren, dass ein Ladevorgang korrekt vollzogen wird. Eine elektronische Funktion kann darin liegen, eine Messung von z.B. Temperatur, Strom oder Spannung in Verbindung mit einem Steuerungs- oder Regelungskreislauf zu realisieren. Eine elektronische Funktion kann z.B. durch einen Verriegelungsaktuator erfüllt werden. Durch die Eingliederung möglichst vieler Funktionen in einem zentralen Standard-Modul kann die Funktionssicherheit der Ladedose verbessert werden, insbesondere indem dieselben Bauteile verwendet und dieselben Schutzfunktionen eingesetzt werden. Zudem sind Reparatur und Wartung dadurch erleichtert.

Trotz der Eingliederung einer Vielzahl an Funktionen kann das Kernmodul als zentrales, immer gleichbleibendes Kernteil ausgeführt sein. An dem Kernmodul können Varianzbauteile, insbesondere weitere Module, befestigt werden, z.B. mittels Schraubpunkten oder Clipsgeometrien, um Anforderungen spezifischer Einbausituationen gerecht werden zu können. Über das Kernmodul können dabei auch mechanische Kräfte, die bei einem Ladevorgang möglicherweise auf die Ladedose wirken, über den Ladedosenhalter auf definierte Weise, insbesondere über eine definierte Fläche verteilt, auf die Karosserie abgeleitet werden. Dabei kann der Ladedosenhalter z.B. zunächst an dem Befestigungsflansch der Ladedose befestigt werden, um dann den Ladedosenhalter an der Karosserie eines Fahrzeugs zu montieren, oder der Ladedosenhalter kann bereits an der Karosserie vorgesehen sein und die Ladedose wird direkt über den Befestigungsflansch mit der Karosserie bzw. dem Ladedosenhalter verbunden. In beiden Fällen kann der Ladedosenhalter als ein einbausituations-unabhängiges Standard-Bauteil ausgeführt sein, welches auf einheitliche Weise mit der Ladedose, insbesondere dem Befestigungsflansch, verbindbar ist, so dass unabhängig von einer bevorzugten Montagevariante der Ladedosenhalter und der Befestigungsflansch zusammen eine einheitliche, normierbare Schnittstelle zum Fahrzeug, insbesondere zur Karosserie sicherstellen.

In einer vorteilhaften Ausgestaltung der Erfindung ist der Befestigungsflansch für alle Varianten der Ladevorrichtung einheitlich ausgeführt, insbesondere indem eine definierte Anordnung von Befestigungspunkten, bevorzugt Anschraubpunkten in einer Lochgeometrie, vorgesehen ist. Mit anderen Worten kann der Befestigungsflansch einbausituations-unabhängig als Standard-Befestigungsflansch ausgeführt sein. Als Lochgeometrie ist bevorzugt eine Vielzahl an Durchgangsbohrungen, wahlweise mit Innengewinde, auf einem Kreis oder mehreren konzentrisch zueinander vorgesehenen Kreisen zu verstehen. Wahlweise können auch Schweiß-, Clips- und/oder Rastpunkte vorgesehen sein, z.B. in regelmäßigem Abstand in einem Kreis angeordnet. Hierdurch kann sichergestellt werden, dass ein Karosserie-Hersteller die Karosserie im Hinblick auf einen standardisierten Flansch bereitstellen kann und dass die Ladedose immer auf dieselbe Art und Weise an einer Karosserie befestigt werden kann. Somit kann z.B. auch bei unterschiedlichen Einbaumulden die Ladedose auf dieselbe Art und Weise befestigt werden. Bei einer standardisierten Lochgeometrie kann der Karosseriehersteller an entsprechenden Stellen z.B. Gewindebohrungen an der Karosserie vorsehen. Eine Vereinheitlichung eines der Module in Verbindung mit einem vereinheitlichten Befestigungsflansch liefert zum einen den Vorteil einer vereinfachten Herstellung der gesamten Ladevorrichtung, auch bei unterschiedlichen Herstellern für jedes der Module, zum anderen den Vorteil einer vereinheitlichten Montage und dadurch auch einer vorgegebenen Lage der nicht vereinheitlichten Module in Bezug auf die Karosserie.

In einer vorteilhaften Ausgestaltung der Erfindung ist das Modul vom ersten Modultyp mit dem Ladedosenhalter gekoppelt, und der Ladedosenhalter ist für alle Varianten der Ladevorrichtung einheitlich ausgeführt, insbesondere indem eine definierte Anordnung von Befestigungspunkten, bevorzugt Anschraubpunkten in einer Lochgeometrie, vorgesehen ist. Mit anderen Worten kann der Ladedosenhalter einbausituations-unabhängig als Standard-Ladedosenhalter ausgeführt sein. Wahlweise können auch Schweiß-, Clips- und/oder Rastpunkte vorgesehen sein. Durch einen standardisierten Ladedosenhalter kann die Montage der Ladedose auf vereinheitlichte Weise erfolgen. Der Ladedosenhalter kann in Bezug auf eine Kopplung an den Befestigungsflansch ausgelegt sein, und gleichzeitig kann er in radialer und/oder axialer Richtung eine Ausgleichsfunktion übernehmen, sofern diese bei bestimmten Einbaumulden erforderlich sein sollte. Gemäß einer Variante kann der Ladedosenhalter auch an variablen Verbindungspunkten mit einer Karosserie verbindbar sein, insbesondere indem z.B. Langlöcher vorgesehen werden, oder mehrere in konzentrisch zueinander angeordneten Kreisen eingebrachte Durchgangsbohrungen. Dies erhöht auch bei einem vereinheitlichten Ladedosenhalter die Flexibilität, die möglicherweise bei einer besonders hohen Anzahl unterschiedlicher Karosserieformen erforderlich ist. Somit kann jede Art von Ladedose über den Befestigungsflansch und den vereinheitlichten Ladedosenhalter mit einer Karosserie verbunden werden, insbesondere auch unabhängig von irgendeiner Steckergeometrie. Eine Vereinheitlichung eines der Module in Verbindung mit einem vereinheitlichten Ladedosenhalter liefert wie auch ein vereinheitlichter Befestigungsflansch zum einen den Vorteil einer vereinfachten Herstellung der gesamten Ladevorrichtung, auch bei unterschiedlichen Herstellern für jedes der Module, zum anderen den Vorteil einer vereinheitlichten Montage und dadurch auch einer vorgegebenen Lage der nicht vereinheitlichten Module in Bezug auf die Karosserie.

Bevorzugt ist der Ladedosenhalter an die Karosserie schraubbar oder schweißbar, also in einem montierten Zustand der Ladevorrichtung an die Karosserie geschraubt oder geschweißt. Hierfür kann der Ladedosenhalter selbst einen Flansch vergleichbar zu dem Befestigungsflansch aufweisen. Es können jedoch auch wesentlich einfacher aufgebaute Schweißlaschen oder irgendein definierter Absatz vorgesehen sein, um den Ladedosenhalter an wenigen Punkten kostengünstig stoffschlüssig mit der Karosserie zu verbinden. Durch den Ladedosenhalter kann somit auch eine irreversible Verbindungsart genutzt werden, um eine standardisierte Schnittstelle an einer Karosserie vorzusehen, ohne dass ein Karosseriehersteller sich darum bemühen muss. Der Ladedosenhalter kann somit als Adapter dienen. Bei einer Schraubverbindung kann es zweckdienlich sein, wenn ein Karosseriehersteller entsprechende Bohrungen an der Karosserie bereits vorsehen lässt.

Bevorzugt ist der Ladedosenhalter mit dem Befestigungsflansch verschraubt. Eine Schraubverbindung stellt auf einfache Weise eine hoch belastbare, reversible Verbindung her und kann auch die erforderliche Kraft liefern, um eine Abdichtung der Ladedose gegenüber der Karosserie zu erzielen. Auch kann durch einen Ladedosenhalter, der selbst z.B. mit der Karosserie verschweißt werden kann, ein Adapter bereitgestellt werden, durch welchen es nicht mehr erforderlich ist, die Karosserie streng im Hinblick auf einen standardisierten Befestigungsflansch auszulegen, oder durch welchen die Wahl der Befestigungsart an der Karosserie flexibler erfolgen kann, also z.B. nicht auf eine möglicherweise beim Befestigungsflansch besonders bevorzugt Schraubverbindung beschränkt ist.

In einer vorteilhaften Ausgestaltung der Erfindung ist an der Ladevorrichtung ein Ladeklappenmodul zum Verschließen einer Einbaumulde einer Karosserie, in welcher die Ladedose zumindest teilweise anordenbar ist, vorgesehen, und die Ladedose ist an dem Modul des ersten Modultyps mit einer für alle Varianten der Ladevorrichtung einheitlichen Außengeometrie ausgeführt, und das Ladeklappenmodul weist eine für alle Varianten der Ladevorrichtung einheitliche Schnittstelle auf, über welche das Ladeklappenmodul unabhängig von der Form des Ladesteckers über die Außengeometrie mit der Ladedose koppelbar ist. Mit anderen Worten kann eine einbausituationsunabhängige Standard-Außengeometrie in Verbindung mit einer einbausituations-unabhängigen Schnittstelle bereitgestellt werden. Hierdurch kann in Verbindung mit einer einbausituations-unabhängigen Außengeometrie von Steckern unabhängig von der Ladedose immer das gleiche Ladeklappenmodul verwendet werden, und es kann sichergestellt werden, dass für verschiedene Ladestecker, z.B. in Asien und in Europa, dasselbe Ladeklappenmodul verwendet werden kann. Bevorzugt liegt die Standard-Außengeometrie an einer Innen- oder Außenfläche des Standard-Moduls vor, insbesondere an einer Innen- oder Außenmantelfläche. Die Standard-Außengeometrie kann z.B. eine zylindrische Fläche oder auch eine konische Fläche sein. Die Entkopplung der Schnittstelle von der Steckergeometrie liefert auch den Vorteil, dass auch dann wenn nicht immer die gleichen Ladestecker verwendet werden können, der Aufbau der Ladevorrichtung und dessen Anbindung ans Fahrzeug identisch ausgeführt werden können.

Das Ladeklappenmodul ist bevorzugt als Modul der Ladevorrichtung aufzufassen und nicht als Modul der Ladedose selbst, insbesondere weil das Ladeklappenmodul in seiner Funktion eher der Karosserie zuzuordnen ist als der mit elektrischen und elektronischen Funktionen versehenen Ladedose. Das Ladeklappenmodul braucht nur mit einer Schnittstelle ausgeführt zu sein, die mit der Standard-Außengeometrie korrespondiert. Das Ladeklappenmodul kann als eine Art Verschlusskörper aufgefasst werden, über welchen z.B. vermieden werden kann, dass gute aerodynamische Eigenschaften der Karosserie nicht durch eine Einbaumulde verschlechtert werden. Das Ladeklappenmodul kann dabei auch zum Verschließen von Aussparungen oder Hohlräumen zwischen einer Karosserie und der Ladedose dienen. Das Ladeklappenmodul kann z.B. an eines der weiteren Module gekoppelt sein, bevorzugt an das Standard-Modul, auch für den Fall dass es zusätzlich zu drei in Reihe angeordneten Modulen vorgesehen ist.

In einer Variante weist das mittlere Modul seitens des nach außen gerichteten Moduls einen Grundkörper auf, welcher die einbausituationsunabhängige Standard-Außengeometrie aufweist, durch welche die Ladevörrichtung unabhängig von der Form oder Außengeometrie eines Steckers mit der Karosserie koppelbar ist. Durch die Entkopplung der standardisierten Außengeometrie von dem Befestigungsflansch kann der Befestigungsflansch allein im Hinblick auf die Kopplung zur Karosserie oder zur Ladedosenhalterung ausgelegt werden, und die unterschiedlichen Formen von Steckern müssen bei dem Befestigungsflansch nicht berücksichtigt werden. Ferner kann durch den Grundkörper die Standard-Außengeometrie in einer vorteilhaften Lage weit in Richtung der nach außen weisenden Seite der Ladedose vorgesehen werden, wodurch das Ladeklappenmodul einfacher, insbesondere auch flacher, ausgeführt werden kann. Es brauchen dann bei der Konstruktion des Ladeklappenmoduls nicht so viele Randbedingungen beachtet werden wie in dem Fall dass die Standard-Außengeometrie an einem weiter innen liegenden Befestigungsflansch vorgesehen ist.

Bevorzugt ist das mittlere Modul für eine mechanische Funktion der Ladevorrichtung ausgebildet. Als eine mechanische Funktion ist bevorzugt jede Funktion zu verstehen, die keine elektrische oder elektronische Funktion ist. Bevorzugt weist das mittlere Modul daher mehrere der folgenden Komponenten auf: einen Wasserablauf, eine Dichtung, eine zweistufige Clipsgeometrie für eine Weichkomponente, oder einen Platzvorbehalt seitens des nach außen gerichteten Moduls, wobei durch den Platzvorbehalt eine größere Variabilität für den das äußere Modul bereitstellenden Lieferanten sichergestellt werden kann. Der Wasserablauf kann auch Teil eines Wassermanagements sein, durch welches in die Einbaumulde eintretendes oder mit der Ladedose in Kontakt geratendes Wasser abgeleitet werden kann. Ein Verriegelungsaktuator kann für die Verriegelung oder Freigabe eines Steckers bereitgestellt sein, z.B. in digitaler Form. Durch die Eingliederung möglichst vieler dieser Komponenten in das mittlere Modul kann die Funktionssicherheit der Ladedose verbessert werden und die Kosten der gesamten Ladevorrichtung können gesenkt werden, da mehr Komponenten in höherer Stückzahl bereitgestellt werden können. Auch Reparatur und Wartung können dadurch erleichtert werden.

Wie erwähnt wird die zuvor genannte Aufgabe auch durch eine Ladevorrichtung mit den Merkmalen des Patentanspruchs 7 gelöst.

Wie erwähnt wird die zuvor genannte Aufgabe auch durch ein Fahrzeug mit den Merkmalen des Patentanspruchs 8 gelöst, nämlich ein Fahrzeug mit einer aus einem erfindungsgemäßen Modulsystem erstellten Ladedose als Teil der Ladevorrichtung sowie mit einem Akkumulator für einen Elektroantrieb des Fahrzeugs, wobei die Ladevorrichtung aus mindestens drei seriell, also nebeneinander in Reihe angeordneten Modulen aufgebaut ist und dabei das mittlere zwischen anderen Modulen angeordnete Modul vom ersten Modultyp ist, welches derart an dem Fahrzeug angeordnet ist, dass die anderen Module vom zweiten und dritten Modultyp nach dem Einbau des Moduls vom ersten Modultyp mit diesem koppelbar sind. Hierdurch kann es einem Fahrzeughersteller ermöglicht werden, das Fahrzeug mit bereit vorinstallierten Ladedosenkomponente bereitzustellen, und die anderen Module nachträglich zu montieren. Dies liefert eine größere Flexibilität bei der Produktion. Bevorzugt ist das Standard-Modul in einer von einer Wandung der Karosserie definierten Ebene angeordnet, welche derart ausgerichtet ist, dass die äußere Schnittstelle des Standard-Moduls von der Einbaumulde aus zugänglich ist und die innere Schnittstelle des Standard-Moduls von der Karosserieinnenseite her zugänglich ist. Hierdurch können bei einfacher Montage Steckverbindungen wie Rastnasen, Clipse oder dergleichen genutzt werden.

Die vorstehend in der Beschreibung genannten Merkmale und Merkmalskombinationen sowie die nachfolgend in der Figurenbeschreibung genannten oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen, wobei gleiche oder funktionsgleiche Elemente mit identischen Bezugszeichen versehen sind. Dabei zeigen:
- Fig. 1: in einer Seitenansicht eine aus einem Modulsystem gemäß einem Ausführungsbeispiel der Erfindung erstellte Ladevorrichtung;
- Fig. 2a: in einer schematischen Schnittansicht eine Ausführungsform für eine Anbindung einer aus einem Modulsystem gemäß einem Ausführungsbeispiel der Erfindung erstellten Ladevorrichtung an eine Karosserie;
- Fig. 2b: in einer schematischen geschnittenen Ansicht eine Ausführungsform für eine Anbindung einer aus einem Modulsystem gemäß einem Ausführungsbeispiel der Erfindung erstellten Ladevorrichtung an eine Karosserie, wobei ein Ladeklappenmodul vorgesehen ist;
- Fig. 3a: in einer schematischen Ansicht eine Mulde einer Karosserie, in welcher eine Ladedose gemäß dem Stand der Technik angeordnet ist;
- Fig. 3b: eine schematische Ansicht wie in Fig. 3a, wobei die Ladedose gemäß dem Stand der Technik für eine andere Steckergeometrie vorgesehen ist;
- Fig. 3c: in einer schematischen Ansicht einen Teil einer aus einem Modulsystem gemäß einem Ausführungsbeispiel der Erfindung erstellten Ladevorrichtung, welcher im Bereich der Karosserie eines Fahrzeugs angeordnet ist und eine spezifische Außengeometrie aufweist;
- Fig. 3d: eine schematische Ansicht wie in Fig. 3c, wobei die Ladevorrichtung für eine andere Steckergeometrie vorgesehen ist;
- Fig. 4a: in einer schematische Ansicht einen Befestigungsflansch und einen Ladedosenhalter für eine aus einem Modulsystem gemäß einem Ausführungsbeispiel der Erfindung erstellte Ladevorrichtung;
- Fig. 4b: eine schematische Ansicht wie in Fig. 4a, wobei nach Stand der Technik ein anderer Ladedosenhalter und ein anderer Befestigungsflansch vorgesehen sind; und
- Fig. 5: eine Skizze zur Veranschaulichung eines Ausführungsbeispiels eines erfindungsgemäßen Modulsystems.

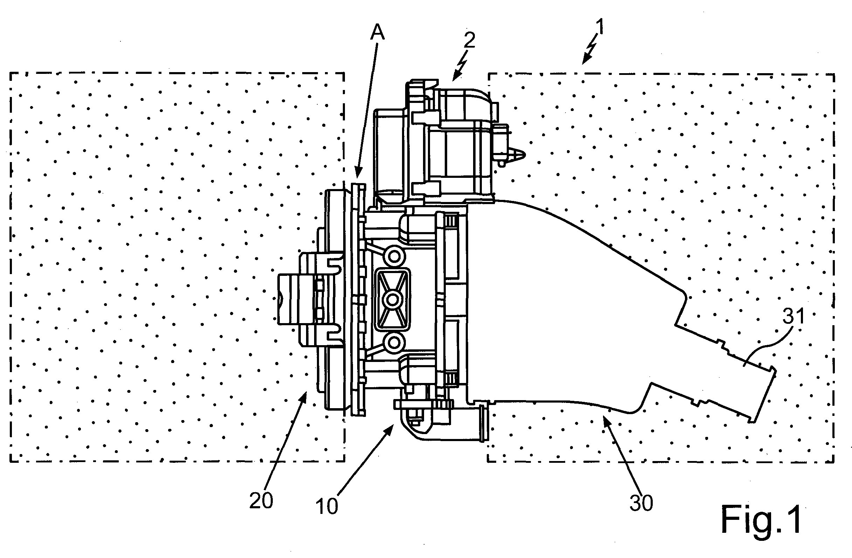

In der Fig. 1 ist eine Ladevorrichtung 1 mit einer Ladedose 2 gezeigt, die sich aus drei Modulen 10, 20, 30 zusammensetzt, nämlich einem in einem montierten Zustand an einer Karosserie eines Fahrzeugs nach außen zur Karosserieaußenseite gerichteten Modul 20, einem mittleren Modul 10, und einem nach innen gerichteten Modul 30. Das mittlere Modul 10 weist an der Seite zum nach außen gerichteten Modul 20 eine standardisierte Außengeometrie A auf, z.B. in Form einer kreisrunden Außenmantelfläche, über welche die Ladedose 2 in eine Karosserie integriert und abgedichtet werden kann. Die drei Module 10, 20, 30 können unabhängig voneinander von verschiedenen Herstellern bereitgestellt werden. An der Ladedose 2, bevorzugt an dem mittleren Modul 10, ist ein Befestigungsflansch (nicht dargestellt) vorgesehen, über welchen die Ladedose 2 mit einem Ladedosenhalter (nicht dargestellt) verbindbar ist. Der Ladedosenhalter ist an eine Karosserie gekoppelt und stellt die Befestigung und Ausrichtung der Ladedose 2 in Bezug auf die Karosserie sicher.

Das mittlere Modul 10 kann als Kernmodul ausgeführt sein, in welches z.B. Kontakte und/oder ein Wassermanagement und -ablauf und/oder Dichtungen zum Leitungsabgang und/oder ein Verriegelungsaktuator und/oder ein Temperatursensor integriert sind. Hierdurch ergibt sich eine große Variabilität bei gleichzeitig standardisierter und kostengünstiger Einbindung der Ladedose 2 in eine Karosserie. Das mittlere Modul 10 kann ferner einen Dosengrundkörper sowie eine zweistufige Clipgeometrie für eine Weichkomponente und einen Platzvorbehalt für gewisse, möglicherweise optionale Komponenten wie z.B. eine Designblende aufweisen.

Das nach außen gerichtete Modul 20 ist als ein Modul ausgeführt, welches eine hohe Varianz für einen Automobilhersteller ermöglicht, z.B. in Bezug auf eine Anbindung an eine Weichkomponente, einen Designdeckel oder den Mechanismus bei einem Designdeckel, z.B. klappen, stecken oder drehen, eine Designblende oder auch eine Beleuchtung, z.B. mittels LED.

Das nach innen gerichtete Modul 30 ist als ein Modul ausgeführt, welches vornehmlich die Funktionen eines Leitungsabgangs erfüllt, d.h., darin können eine Tülle 31 und/oder Kontakte als Verbindungen zur Leitung und/oder eine Leitungsbefestigung oder mehrere Leitungsführungen vorgesehen sein.

Der modulare Aufbau ist durch die beiden hinterlegten und von Strichpunktlinien umrandeten Flächen verdeutlicht: an dem mittleren Modul 10 sind an beiden Seiten über Schnittstellen die beiden anderen Module gekoppelt, jedoch ist jedes Modul für sich eine eigenständige Baugruppe, die jeweils wahlweise von einem spezifischen Hersteller produziert und bereitgestellt werden kann. Die Einbausituation bei einem bestimmten Fahrzeug muss dabei von den Herstellern des außen- oder innenliegenden Moduls nicht berücksichtigt werden.

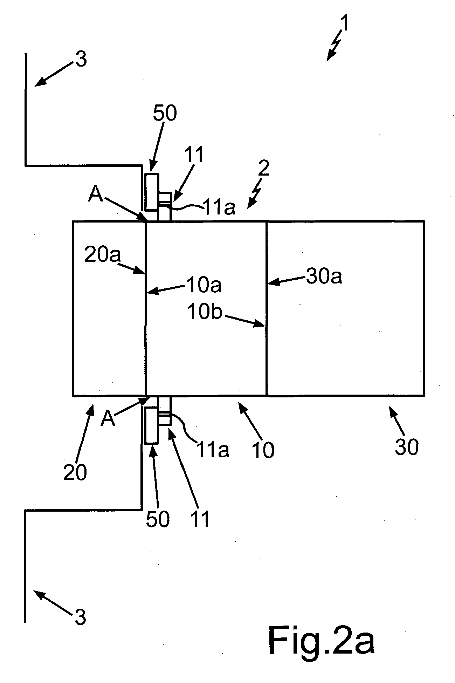

In der Fig. 2a ist eine Ladevorrichtung 1 mit einer aus den bereits beschriebenen Modulen 10, 20, 30 bestehenden Ladedose 2 gezeigt, wobei an dem mittleren Modul 10 ein Befestigungsflansch 11 vorgesehen ist, welcher in Verbindung mit einem Ladedosenhalter 50 ist, der an eine Karosserie 3 eines Fahrzeugs (nicht dargestellt) gekoppelt ist. Der Befestigungsflansch 11 weist Durchführungen 11a auf, die z.B. als Anschraublöcher ausgebildet sind, und über welche das mittlere Modul 10 und damit die gesamte Ladedose 2 mit dem Ladedosenhalter 50 verbunden, insbesondere verschraubt werden kann. Der Befestigungsflansch 11 kann als ein eigenständiges Bauteil vorgesehen sein, so wie in der Fig. 2a suggeriert, er kann aber auch einstückig mit einem Bauteil des mittleren Moduls 10 verbunden sein, z.B. einstückig in Form einer an einem Dosengrundkörper hervorstehenden Rippe oder umlaufenden Lasche.

Der Befestigungsflansch 11 kann etwas beabstandet zu der an das nach außen gerichtete Modul 20 angrenzenden Seite vorgesehen sein und dabei auch ganz unabhängig von der standardisierten Außengeometrie A sein. Wahlweise kann der Befestigungsflansch 11 aber zumindest teilweise auch die Außengeometrie A bilden. Dies kann z.B. dann Vorteile bieten, wenn über die Außengeometrie A eine Abdichtung in Bezug auf eine Karosserie erfolgen soll und die Abdichtung auch durch einen Anpressdruck erzielt werden kann. Dann kann der Anpressdruck über den Befestigungsflansch 11 aufgebracht und unmittelbar auf ein Abdichtmittel zwischen der Außengeometrie A und der Karosserie übertragen werden.

Der Ladedosenhalter 50 kann mit der Karosserie 3 derart verbunden sein, dass der Befestigungsflansch 11 von innen oder von außen oder auch radial mit dem Ladedosenhalter 50 in Verbindung gebracht werden kann. Bevorzugt ist der Ladedosenhalter 50 mit der Karosserie 3 derart verbunden, dass der Befestigungsflansch 11 von innen mit dem Ladedosenhalter 50 in Verbindung gebracht werden kann, so dass Schraubverbindungen oder andere Verbindungsmittel keinen extra abgedichteten Bereich freilegen, sondern eine Abdichtung unabhängig von der Art der Verbindung erfolgen kann. Der Ladedosenhalter 50 ist bevorzugt an die Karosserie 3 geschweißt oder geschraubt.

Die drei Module 10, 20, 30 sind in Reihe angeordnet und jeweils über eine Schnittstelle 10a, 10b, 20a, 30a miteinander gekoppelt, und zwar über ihre Stirnseiten, die zumindest annähernd parallel zu einer angrenzenden Karosserie angeordnet sind, also zumindest annähernd senkrecht zu einer Richtung, in welcher elektrische Verbindungen zwischen den Modulen verlaufen. Auf diese Weise können die Module 10, 20, 30 auf einfache Weise miteinander verbunden werden, insbesondere auch unabhängig von einem Montageschritt des mittleren Moduls 10 an der Karosserie 3, denn das äußere Modul 20 und das innere Modul 30 können z.B. auch nach Montage des mittleren Moduls 10 an das mittlere Modul 10 gekoppelt werden.

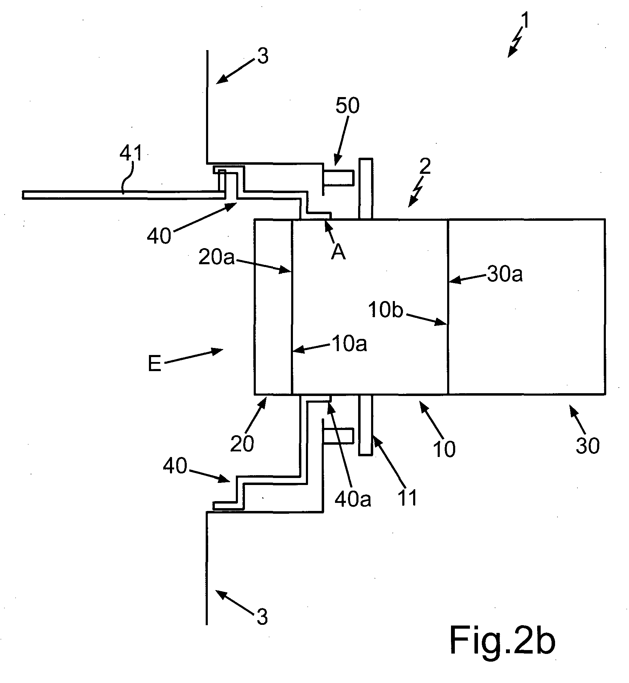

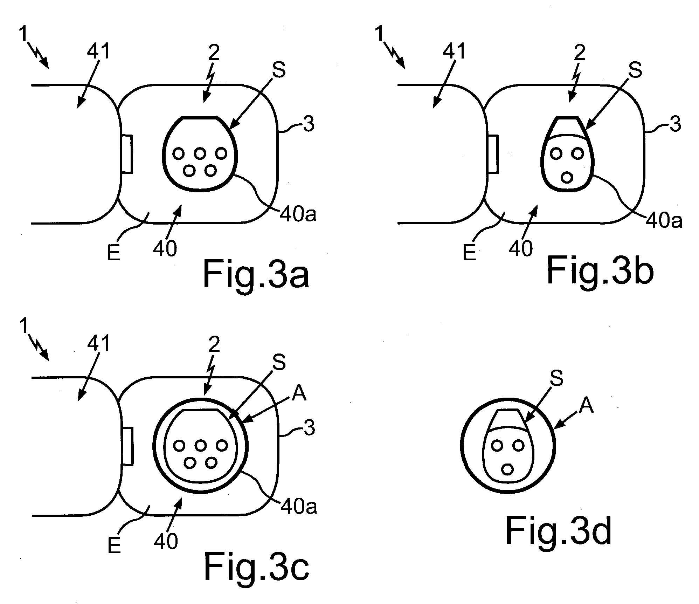

In der Fig. 2b ist gezeigt, auf welche Weise eine in einer Einbaumulde E vorgesehene Ladedose 2 mit einem Ladeklappenmodul 40 gekoppelt werden kann, so dass eine Kopplung zwischen Ladedose 2 und Ladeklappenmodul 40 unabhängig von einer spezifischen Steckergeometrie ist, wie im Zusammenhang mit Fig. 3c und 3d näher erläutert. Das Ladeklappenmodul 40 ist mit der Karosserie 3 gekoppelt und dient dabei auch zum Abdecken der Einbaumulde E, wozu es eine Ladekfappe 41 aufweist. An dem Ladeklappenmodul 40 ist eine standardisierte Schnittstelle 40a vorgesehen, über welche das Ladeklappenmodul 40 mit der Ladedose 2 koppelbar ist, insbesondere mit dem nach außen gerichteten Modul 20, oder wie dargestellt mit dem mittleren Modul 10, wofür eine standardisierte Außengeometrie A vorgesehen ist. Die in Fig. 2b angedeuteten Lagen und Anordnungen der einzelnen Module sind schematisiert. Dargestellte Abstände zwischen Modulen oder Flanschen sind nicht notwendigerweise erforderlich. Die Fig. 2b dient der prinzipiellen Darstellung der steckerunabhängigen Kopplung zwischen einer einheitlichen Schnittstelle 40a des Ladeklappenmoduls 40 und einem der Module 10, 20, 30.

In der Fig. 3a ist eine Ansicht von außen auf eine Ladedose 2 mit einer Geometrie gezeigt, wie sie in Europa häufig zum Einsatz kommt. Ein Teil einer Karosserie 3 ist als eine Einbaumulde E geformt, in welche die Ladedose 2 eingesetzt ist. Die Einbaumulde E kann durch eine Ladeklappe 41 abgedeckt werden, welche Bestandteil eines Ladeklappenmoduls 40 ist. Das Ladeklappenmodul 40 ist an einer Schnittstelle 40a mit der Ladedose 2 gekoppelt, indem die Schnittstelle 40a in der Form eines Steckers ausgeführt ist, nämlich eine Geometrie entsprechend einer Steckergeometrie S aufweist.

In der Fig. 3b ist eine Schnittstelle 40a für einen Stecker mit einer Steckergeometrie S gezeigt, wie sie häufig in Asien, z.B. in Japan, zu finden ist. Die Steckergeometrie S der Fig. 3b weicht von jener der Fig. 3a ab, und da auch die Schnittstellen 40a in beiden Fällen auf die Steckergeometrie S abgestimmt sind, weichen auch die Schnittstellen 40a voneinander ab. Mit anderen Worten muss bei diesen Ladeklappenmodulen 40 die Schnittstelle 40a jeweils auf die Steckergeometrie S ausgelegt werden.

In der Fig. 3c ist gezeigt, dass mit einer Ladedose 2 mit einer vereinheitlichten Außengeometrie A in allen Fällen dasselbe Ladeklappenmodul 40 verwendet werden kann. Die Außengeometrie A wird bevorzugt durch das mittlere Modul der Ladedose 2 bereitgestellt, kann aber auch durch das nach außen gerichtet Modul der Ladedose 2 bereitgestellt sein. Die Außengeometrie A kann z.B. durch einen kreisrunden rundum laufenden Flansch bereitgestellt werden, in welchem auch ein Durchlass für einen Stecker vorgesehen ist. Hierdurch kann unabhängig von der Steckergeometrie ein Ladeklappenmodul 40 mit gleichbleibender (insbesondere kreisrunder) Schnittstelle 40a verwendet werden. Das Ladeklappenmodul 40 ist damit vereinheitlicht und kann und in einem montierten Zustand als ein Standard-Teil der Ladevorrichtung 1 vorgesehen sein.

In der Fig. 3d ist nochmals für den Stecker mit einer Steckergeometrie S, wie sie häufig in Asien, z.B. in Japan, zu finden ist, gezeigt, auf welche Weise ein vereinheitlichtes Ladeklappenmodul 40 verwendet werden kann.

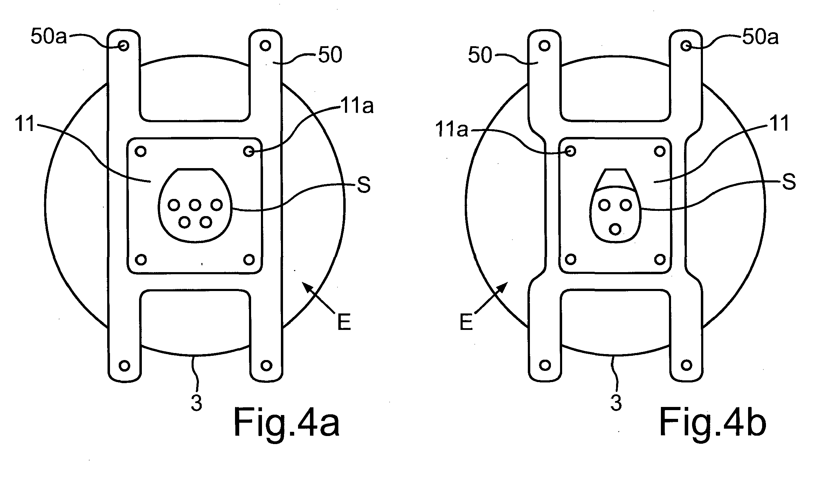

In der Fig. 4a ist ein bestimmter Typ eines Befestigungsflansch 11 gezeigt, welcher über Anschraublöcher 11 a mit einem Ladedosenhalter 50 verbunden werden kann. Auch der Ladedosenhalter 50 weist Anschraublöcher 50a auf, über welche er an eine Karosserie 3 gekoppelt werden kann. Aus der Fig. 4a geht hervor, dass der Befestigungsflansch 11 die Steckergeometrie S radial überragt, also deutlich weiter radial absteht. Hierdurch ist die Verbindung zwischen dem Befestigungsflansch 11 und dem Ladedosenhalter 50 unabhängig von der Ausgestaltung eines Steckers. Vielmehr kann sie auf dieselbe Art und Weise erfolgen. Der Ladedosenhalter 50 überragt einen Ausschnitt einer Karosserie 3, über welchen eine Einbaumulde E definiert ist. Hierdurch kann sichergestellt werden, dass unabhängig von der Karosserieform die Ladedose jedenfalls über den vereinheitlichten Befestigungsflansch 11 in Verbindung mit dem vereinheitlichten Ladedosenhalter 50 an die Karosserie 3 gekoppelt werden kann.

In der Fig. 4b ist eine Variante des Ladedosenhalters 50 und des Befestigungsflansches 11 gezeigt. Diese Variante ist gemäß dem Stand der Technik erforderlich, um eine Anbindung der Ladedose bei einer abweichenden Steckergeometrie S zu ermöglichen. Gemäß der vorliegenden Erfindung ist der Befestigungsflansch 11 hingegen derart ausgebildet, dass er unabhängig von der Art des Steckers, d.h. unabhängig von der Steckergeometrie S einheitlich ausgeführt sein kann, und dabei kann auch der Ladedosenhalter 50 unabhängig von der Steckergeometrie S einheitlich ausgeführt sein.

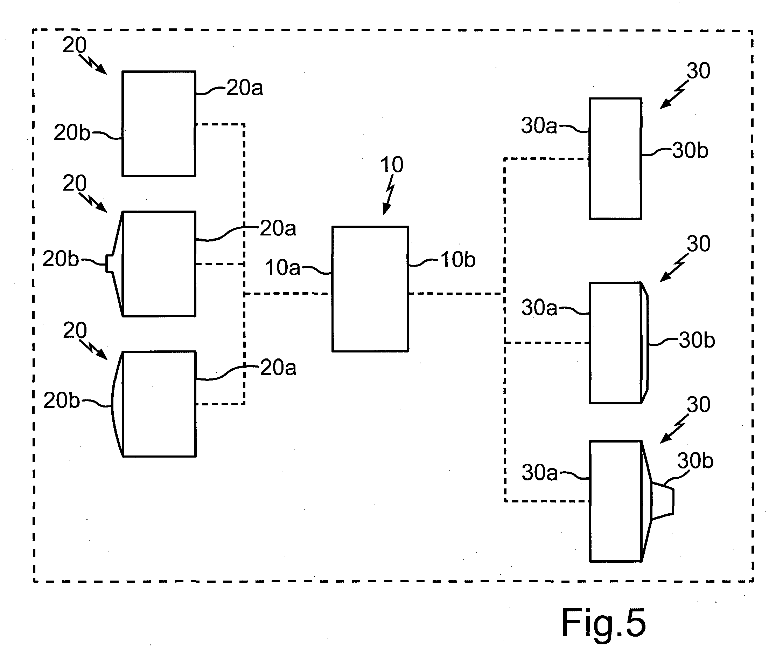

In der Fig. 5 ist ein Modulsystem veranschaulicht, bei welchem ein Modul eines ersten Modultyps 10 vorgesehen ist und sechs Module 20, 30 eines zweiten und dritten Modultyps. Die Modultypen unterscheiden sich dahingehend, dass bei dem ersten Modultyp 10 zwei Schnittstellen zu anderen Modulen als definierte Schnittstellen 10a, 10b ausgeführt sind, wohingegen bei dem zweiten und dritten Modultyp 20, 30 nur eine Schnittstelle 20a, 30a, nämlich diejenige zu dem Modul des ersten Modultyps 10, als definierte Schnittstelle 20a, 30a ausgeführt ist und die andere Schnittstelle 20b, 30b jeweils von der entsprechenden Schnittstelle 20b, 30b der weiteren Module des gleichen Modultyps 20, 30 abweicht. Hierdurch kann eine große Variantenvielfalt bereitgestellt werden, im gezeigten Beispiel neun unterschiedlich aufgebaute Ladevorrichtungen, die aber in allen Fällen auf dieselbe Art miteinander sowie mit einer Karosserie koppelbar sind.

## Patentansprüche

1. Modulsystem zum Bilden einer Ladedose (2) einer Ladevorrichtung (1) zum Laden einer elektrischen Speichervorrichtung eines Fahrzeugs, wobei die Ladedose (2) eine Buchse zur Aufnahme eines Ladesteckers sowie einen Befestigungsflansch (11) zum Befestigen der Ladedose (2) an dem Fahrzeug aufweist,
**dadurch gekennzeichnet, dass**
das Modulsystem zum Erstellen einer Vielzahl von Varianten der Ladevorrichtung (1) ausgebildet ist und umfasst:
- einen ersten, einbausituations-unabhängigen Modultyp (10) mit einer ersten Schnittstelle (10a) und einer zweiten Schnittstelle (10b);
- mehrere Varianten eines zweiten Modultyps (20) mit jeweils einer ersten Schnittstelle (20a) und einer zweiten Schnittstelle (20b), wobei die Varianten unterschiedliche zweite Schnittstellen und übereinstimmende erste Schnittstellen aufweisen;
- mehrere Varianten eines dritten Modultyps (30) mit jeweils einer ersten Schnittstelle (30a) und einer zweiten Schnittstelle (30b), wobei die Varianten unterschiedliche zweite Schnittstellen und übereinstimmende erste Schnittstellen aufweisen;
wobei die erste Schnittstelle (20a) des zweiten Modultyps (20) zur Kopplung mit der ersten Schnittstelle (10a) des ersten Modultyps (10) ausgebildet ist;
wobei die erste Schnittstelle (30a) des dritten Modultyps (30) zur Kopplung mit der zweiten Schnittstelle (10b) des ersten Modultyps (10) ausgebildet ist;
und wobei die Ladedose (2) bildbar ist aus einer Kopplung einer Variante des zweiten Modultyps (20), dem ersten Modultyp (10) und einer Variante des dritten Modultyps (30), wobei die Modultypen, aus denen die Ladedose (2) bildbar ist, derart miteinander koppelbar sind, dass bei einem Beladevorgang ein Ladestrom durch jeden der Modultypen, durch welche die Ladedose gebildet ist, fließt.

2. Modulsystem nach Anspruch 1,
**dadurch gekennzeichnet, dass**
die Ladedose (2) aus drei seriell angeordneten Modulen (10, 20, 30) bildbar ist.

3. Modulsystem nach Anspruch 2,
**dadurch gekennzeichnet, dass**
das Modulsystem an der Ladevorrichtung (1) einen Ladedosenhalter (50) zur Montage der Ladedose (2) an einer Karosserie des Fahrzeugs aufweist, und dass der erste Modultyp (10) als ein Kernmodul ausgeführt ist, welches für eine elektrische Funktion der Ladevorrichtung (1) ausgebildet ist und mit dem Ladedosenhalter (50) gekoppelt ist.

4. Modulsystem nach einem der Ansprüche 1 bis 3,
**dadurch gekennzeichnet, dass**
der Befestigungsflansch (11) für alle Varianten der Ladevorrichtung (1) einheitlich ausgeführt ist, insbesondere indem für alle Varianten eine einzige definierte, identische Anordnung von Befestigungspunkten (11a), bevorzugt Anschraubpunkten, also Durchgangsbohrungen, wieder bevorzugt mit Innengewinde, in einer Lochgeometrie, vorhanden ist.

5. Modulsystem nach Anspruch 3,
**dadurch gekennzeichnet, dass**
der Ladedosenhalter (50) für alle Varianten der Ladevorrichtung (1) einheitlich ausgeführt ist, insbesondere indem eine definierte Anordnung von Befestigungspunkten (50a), bevorzugt Anschraubpunkten, also Durchgangsbohrungen, wieder bevorzugt mit Innengewinde, in einer Lochgeometrie, vorhanden ist.

6. Modulsystem nach einem der Ansprüche 1 bis 5, mit einem Ladeklappenmodul (40) zum Verschließen einer Einbaumulde (E) einer Karosserie, wobei die Ladedose (2) zumindest teilweise in der Einbaumulde (E) anordenbar ist,
**dadurch gekennzeichnet, dass**
die Ladedose (2) an dem ersten Modultyp (10) mit einer für alle Varianten der Ladevorrichtung (1) einheitlichen Außengeometrie (A) ausgeführt ist, und das Ladeklappenmodul (40) eine für alle Varianten der Ladevorrichtung (1) einheitliche Schnittstelle (40a) aufweist, über welche das Ladeklappenmodul (40) unabhängig von der Form des Ladesteckers über die Außengeometrie (A) mit der Ladedose (2) koppelbar ist.

7. Ladevorrichtung (1) mit einer Ladedose (2), die aus einem Modulsystem nach einem der vorhergehenden Ansprüche erstellt ist.

8. Fahrzeug mit einer aus einem Modulsystem nach einem der Ansprüche 1 bis 6 erstellten Ladedose (2) als Teil der Ladevorrichtung (1) sowie mit einem Akkumulator für einen Elektroantrieb des Fahrzeugs,
**dadurch gekennzeichnet, dass**
die Ladevorrichtung (1) in betriebsbereitem Zustand aus mindestens drei seriell angeordneten Modulen (10, 20, 30), welche die Ladedose (2) bilden, aufgebaut ist und dabei das mittlere der Modulen (10, 20, 30) vom ersten Modultyp (10) ist, welches derart an dem Fahrzeug angeordnet ist, dass die anderen Module vom zweiten und dritten Modultyp (20; 30) nach dem Einbau des Moduls vom ersten Modultyp (10) nachträglich montierbar und mit diesem koppelbar sind.

## Claims

1. Module system for forming a charging socket (2) of a charging device (1) for charging an electric storage device of a vehicle, whereby the charging socket (2) has a socket for receiving a charging connector and a fastening flange (11) for fastening the charging socket (2) to the vehicle, **characterised in that** the module system is adapted to create a plurality of variants of the charging device (1), and comprises:
- a first, fitting-situation independent module type (10) having a first interface (10a) and a second interface (10b);
- a plurality of variants of a second module type (20) each having a first interface (20a) and a second interface (20b), whereby said variants have different second interfaces and matching first interfaces;
- several variants of a third module type (30) each having a first interface (30a) and a second interface (30b), whereby said variants have different second interfaces and matching first interfaces;
whereby the first interface (20a) of the second module type (20) is arranged to be coupled to the first interface (10a) of the first module type (10);
whereby the first interface (30a) of the third module type (30) is arranged to be coupled to the second interface (10b) of the first module type (10);
and whereby the charging socket (2) can be formed from coupling of a variant of the second module type (20), the first module type (10) and a variant of the third module type (30), whereby the types of modules from which the charging socket (2) can be formed, can be coupled to one another such that, in a charging operation, a charging current flows through each of the module types from which the charging socket is formed.

2. A modular system according to claim 1, **characterised in that** the charging socket (2) can be formed from three serially arranged modules (10, 20, 30).

3. A module system according to claim 2, **characterised in that** the module system for the charging device (1) has a charging socket holder (50) for mounting the charging socket (2) on a body of the vehicle, and that the first module type (10) is designed as a core module, which, for an electric function of the charging device (1), is formed and coupled to the charging socket holder (50).

4. Module system according to one of claims 1 to 3, **characterised in that** the fastening flange (11) for all variants of the charging device (1) is of a uniform design, in particular, that for all variants an identical arrangement of attachment points (11a) is arranged, preferably screw points, that is, through-bore holes, further preferred with internal threads in a hole geometry.

5. Module system according to claim 3, **characterised in that** the charging socket holder (50) for all variants of the charging device (1) is of a uniform design, in particular, that a defined arrangement of attachment points (50a) is arranged, preferably screw points, that is, through-bore holes, further preferred with internal threads in a hole geometry.

6. A module system according to one of claims 1 to 5, with a charging flap module (40) for closing a recessed hollow (E) of a vehicle body, whereby the charging socket (2) can at least be partially disposed in the mounting hollow (E), **characterised in that** the charging socket (2) on the first module type (10) has a uniform outer geometry (A) for all variants of the charging device (1), and the charging flap module (40) has a standard interface (40a) for all variants of the charging device (1) via which the charging flap module (40) can be coupled via the outer geometry (A) with the charging socket (2) independently of the shape of the charging connector.

7. Charging device (1) with a charging socket (2) which is made from a module system according to one of the preceding claims.

8. Vehicle with a charging socket (2) built from a module system according to one of claims 1 to 6 as part of the charging device (1) and with an accumulator for an electric drive of the vehicle, **characterised in that** the charging device (1) in operating condition is made of at least three serially arranged modules (10, 20, 30), which form the charging socket (2), and where the middle module of the modules (10, 20, 30) is of the first module type (10), which is arranged on the vehicle in such a manner that the other modules can be retrofitted from the second and third module types (20, 30) after installation of the module of the first module type (10), and then coupled to it.

## Revendications

1. Système modulaire pour la formation d'une prise de chargement (2) d'un dispositif de chargement (1) pour charger un dispositif de stockage électrique d'un véhicule, dans lequel la prise de chargement (2) présente une douille pour recevoir une fiche mâle de chargement ainsi qu'une bride de fixation (11) pour fixer la prise de chargement (2) sur le véhicule, **caractérisé en ce que** :
le système modulaire est conçu pour établir une pluralité de variantes du dispositif de chargement (1) et comprend :
- un premier type de module (10) indépendant de la situation de montage avec une première interface (10a) et une seconde interface (10b) ;
- plusieurs variantes d'un deuxième type de module (20) avec respectivement une première interface (20a) et une seconde interface (20b), dans lequel les variantes présentent des secondes interfaces différentes et des premières interfaces concordantes ;
- plusieurs variantes d'un troisième type de module (30) avec respectivement une première interface (30a) et une seconde interface (30b), dans lequel les variantes présentent des secondes interfaces différentes et des premières interfaces concordantes ;
dans lequel la première interface (20a) du deuxième type de module (20) est conçue pour le couplage avec la première interface (10a) du premier type de module (10) ;
dans lequel la première interface (30a) du troisième type de module (30) est conçue pour le couplage avec la seconde interface (10b) du premier type de module (10) ;
et dans lequel la prise de chargement (2) peut être formée d'un couplage d'une variante du deuxième type de module (20), du premier type de module (10) et d'une variante du troisième type de module (30), dans lequel les types de modules dont la prise de chargement (2) peut être formée peuvent être couplés l'un à l'autre en sorte que, lors d'une opération de chargement, un courant de chargement s'écoule à travers chacun des types de modules dont la prise de chargement est formée.

2. Système modulaire selon la revendication 1, **caractérisé en ce que** :
la prise de chargement (2) peut être formée de trois modules agencés en série (10, 20, 30).

3. Système modulaire selon la revendication 2, **caractérisé en ce que** :
le système modulaire présente sur le dispositif de chargement (1) un porte-prise de chargement (50) pour le montage de la prise de chargement (2) sur une carrosserie du véhicule et le premier type de module (10) est conçu sous la forme d'un module central qui est destiné à une fonction électrique du dispositif de chargement (1) et est couplé au porte-prise de chargement (50).

4. Système modulaire selon l'une quelconque des revendications 1 à 3,
**caractérisé en ce que** :
la bride de fixation (11) est conçue de manière unitaire pour toutes les variantes du dispositif de chargement (1), en particulier en utilisant pour toutes les variantes un seul aménagement identique défini de points de fixation (11a), de préférence de points de vissage, donc des alésages traversants, mieux encore avec un filet interne, dans une géométrie de trous.

5. Système modulaire selon la revendication 3,
**caractérisé en ce que** :
le porte-prise de chargement (50) est conçu de manière unitaire pour toutes les variantes du dispositif de chargement (1), en particulier en utilisant un aménagement défini de points de fixation (50a), de préférence des points de vissage, donc des alésages traversants, mieux encore avec un filet interne, dans une géométrie de trous.

6. Système modulaire selon l'une quelconque des revendications 1 à 5, comprenant un module de clapet de chargement (40) pour fermer un logement de montage (E) d'une carrosserie, dans lequel la prise de chargement (2) peut être disposée au moins en partie dans le logement de montage (E),
**caractérisé en ce que** :
la prise de chargement (2) sur le premier type de module (10) est conçue avec une géométrie externe (A) unitaire pour toutes les variantes du dispositif de chargement (1) et le module de clapet de chargement (40) présente une interface (40a) unitaire pour toutes les variantes du dispositif de chargement (1), interface via laquelle le module de clapet de chargement (40) peut être couplé à la prise de chargement (2) indépendamment de la forme de la prise mâle de chargement sur la géométrie externe (A).

7. Dispositif de chargement (1) équipé d'une prise de chargement (2), qui est formée d'un système modulaire selon l'une quelconque des revendications précédentes.

8. Véhicule comprenant une prise de chargement (2) formée d'un système modulaire selon l'une quelconque des revendications 1 à 6 en tant que partie du dispositif de chargement (1), ainsi qu'un accumulateur pour une commande électrique du véhicule,
**caractérisé en ce que** :
le dispositif de chargement (1) à l'état prêt au service est formé d'au moins trois modules agencés en série (10, 20, 30), qui forment la prise de chargement (2) et, en l'occurrence, le module central d'entre les modules (10, 20, 30) est d'un premier type de module (10) qui est agencé sur le véhicule de sorte que les autres modules des deuxième et troisième types (20, 30) puissent être montés ultérieurement après le montage du module du premier type (10) et puissent être couplée à ce dernier.
